# EUROPÄISCHE PATENTSCHRIFT

(11) **EP 0 392 328 B1**
(45) Veröffentlichungstag und Bekanntmachung des Hinweises auf die Patenterteilung: **31.08.1994**
(21) Anmeldenummer: 90106413.9
(22) Anmeldetag: 04.04.1990
(51) Int. Cl.: G06F 11/10, G06F 11/16, G09G 1/00

(54) **Verfahren zur ständigen Prüfung einer signaltechnisch sicheren Bildschirmdarstellung**
Method of continuosly monitoring signals of a safe information display
Mèthode pour le contrôle permanent des signaux pour l'affichage des informations sur un écran

(30) Priorität: 12.04.1989 DE 3911907
(43) Veröffentlichungstag der Anmeldung: 17.10.1990
(73) Patentinhaber: Alcatel SEL Aktiengesellschaft, D-70435 Stuttgart (DE)
(72) Erfinder: Blaas, Peter, D-7000 Stuttgart 1 (DE); Krehle, Hans Jürgen, D-7257 Ditzingen (DE); Seitz, Matthias, D-7144 Asperg (DE); Schwarzwälder, Jörg, D-7257 Ditzingen (DE)
(74) Vertreter: Pechhold, Eberhard, Dipl.-Phys.

(56) Entgegenhaltungen:
- DE-A- 3 312 873
- DE-A- 3 324 313
- US-A- 3 634 665
- US-A- 4 342 079
- ELEKTRONISCHE RECHENANLAGEN Band 22, Nr. 5, Oktober 1980,Seiten 229-236, München, DE; H.-J. LOHMANN: "Sicherheit von Mikrocomputern fürdie Eisenbahnsignaltechnik"

## Beschreibung

In eisenbahnsignaltechnischen Anlagen, z.B. Stellwerken oder übergeordneten Leitzentralen wird das aktuelle Betriebsgeschehen heute vielfach auf Bildschirmen, insbesondere Farbmonitoren angezeigt. Sollen aufgrund der Bildschirmdarstellungen sicherheitsrelevante Bedienhandlungen, z.B. Hilfsbedienungen, vorgenommen werden können, so müssen die Bildschirmdarstellungen signaltechnisch gesichert sein.

Aus der DE-OS 33 24 313 ist eine Einrichtung bekannt, die zur sicheren Darstellung von Information auf einem Bildschirm einen Vergleich der Redundanz der auf dem Bildschirm ausgegebenen Information mit der Redundanz einer parallel erarbeiteten, jedoch nicht ausgegebenen, gleichen Information benutzt. Die Redundanzbildung erfolgt hier in besonderen, rückgekoppelten Schieberegistern, die durch einen externen schnellen Taktgeber und eine besondere Steuerungslogik angesteuert werden.

Es ist Aufgabe der Erfindung, ein Verfahren anzugeben, mit dem eine Prüfung eines von einem sicheren Rechnersystem erarbeiteten, auf einem Bildschirm ausgegebenen Meldebildes ohne zusätzliche Hardware möglich ist.

Diese Aufgabe wird durch die im kennzeichnenden Teil des Patentanspruchs 1 angegebenen Merkmale gelöst.

Das Verfahren nach der Erfindung hat neben dem großen Vorteil, daß es eine Prüfung der signaltechnischen Sicherheit einer Bildschirmdarstellung ohne jede zusätzliche Hardware ermöglicht, den weiteren Vorteil, daß der Prüfungsaufwand, z.B. die zur Sicherung der jeweiligen Darstellung erforderliche Zahl von Redundanzbits, der Menge der gespeicherten Information problemlos angepaßt werden kann. Bei einer Redundanzbildung mittels rückgekoppelten Schieberegistern wie beim Stand der Technik muß dagegen stets die zur Sicherung der größten zu speichernden Informationsmenge erforderliche, maximale Zahl von Redundanzbits ermittelt und verglichen werden.

Eine Ausgestaltung des erfindungsgemäßen Verfahrens ist im Anspruch 2 beschrieben und sieht die Möglichkeit vor, die Bildwiederholspeicher in mehrere Bereiche zu unterteilen und die Redundanzen einzelner Bereiche nacheinander miteinander zu vergleichen. Dies erlaubt, den Inhalt der Bildwiederholspeicher abschnittsweise, mittels nur wenige Bit umfassender Redundanzen zu sichern. Außerdem ergibt sich dadurch die Möglichkeit, nur Daten solcher Bereiche zu prüfen, die für die Sicherheit besonders wichtig sind, oder solche Daten öfter zu prüfen als die Daten anderer Speicherbereiche.

Besondere Sicherheit gegenüber einer Falschzuordnung von Prüfredundanzen einander entsprechender Bereiche der Bildwiederholspeicher gibt gemäß Anspruch 3 die Einführung einer Bereichskennung, die zusammen mit den Prüfredundanzen übertragen wird.

Die Ansprüche 4 und 5 betreffen die Bildung einer Gesamtprüfredundanz aus Prüfredundanzen einzelner, vorab gebildeter Bereiche. Anspruch 6 betrifft die Aufschaltung der Bildschirmansteuerrechner auf den Bildschirm.

Eine im Anspruch 7 enthaltene Weiterbildung eröffnet die Möglichkeit, z.B. in besonderen Fällen oder in besonderen Bildspeicherbereichen, die Bildpunktdaten direkt rückzulesen und zu vergleichen.

Anhand einer Figur soll nun das Verfahren nach der Erfindung beispielsweise erläutert werden.

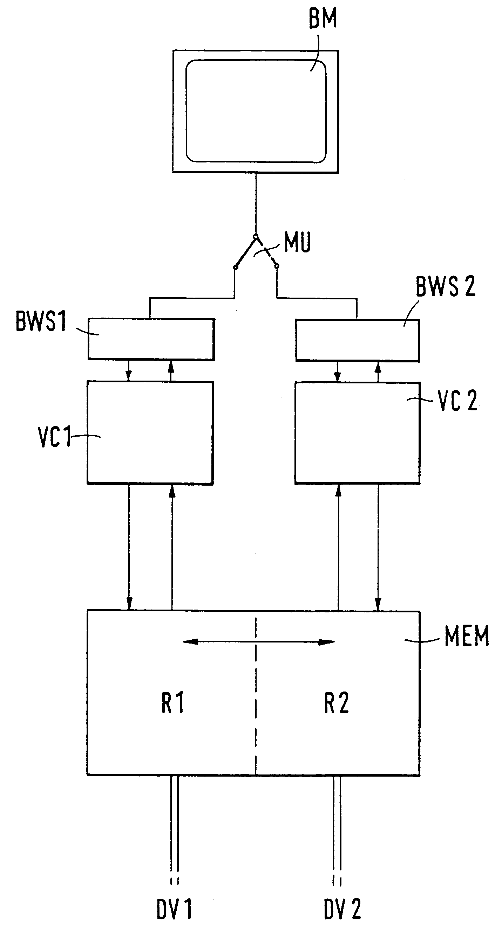

In der Figur ist schematisch der die Meldebildausgabe bewerkstelligende Teil eines rechnergesteuerten Stellwerks dargestellt. Er besteht aus einem sicheren Melde- und Eingabemodul MEM der mindestens zwei parallel arbeitende Rechnersysteme R1, R2 enthält und über parallele Datenkanäle DV1, DV2 mit den übrigen Teilen des Stellwerks verbunden ist. Zur Meldebildausgabe steuert der Melde- und Eingabemodul parallel zwei Bildschirmansteuerrechner VC1 und VC2 an, deren Bildwiederholspeicher BWS1, BWS2 über einen Umschalter MU wahlweise mit einem Bildschirm BM verbunden werden können.

In den beiden Bildwiederholspeichern sind die Daten für jeden einzelnen Bildpunkt des dargestellten Meldebildes parallel abgespeichert. Die gespeicherte Datenmenge pro Bildwiederholspeicher beträgt bei Verwendung eines Präzisions-Farbbildschirms mit einer Auflösung von 640 x 480 Pixeln mehr als 150 kbytes.

Die Bildschirmdarstellung gilt nur dann als signaltechnisch sicher, wenn die in den Bildwiederholspeichern BWS1 und BWS2 abgelegten, unabhängig voneinander erarbeiteten Bildpunktdaten miteinander übereinstimmen. Ist dies der Fall, so ist es gleichgültig, welcher der Bildwiederholspeicher mit dem Bildschirm verbunden ist. Der Umschalter dient dann nur noch dazu, im Störungsfall (z.B. bei Ausfall eines Bildschirmansteuerrechners ) wenigstens eine nicht sichere Bildschirmdarstellung mit Hilfe des zweiten Bildschirmansteuerrechners zu ermöglichen.

Die Prüfung der Übereinstimmung der Bildwiederholspeicherinhalte beginnt mit einem Prüfaufforderungstelegramm, das das Melde- und Eingaberechnersystem MEM quasi gleichzeitig (die beiden Rechner des Melde- und Eingaberechnersystems arbeiten aus Sicherheitsgründen zeitlich gegeneinander versetzt) an beide Bildschirmansteuerrechner VC1 und VC2 ausgibt. Beide Bildschirmansteuerrechner starten daraufhin eine Prüfroutine, die folgende Schritte umfaßt:
- Auslesen der in einem vorgegebenen Teil des Bildwiederholspeichers enthaltenen Bilddaten.
- Dabei Bildung einer Prüfredundanz durch zyklische Verknüpfung mit einem Redundanzpolynom von an die Datenmenge angepaßter Länge.
- Rückübertragung der ermittelten Prüfredundanz an das Melde- und Eingaberechnersystem, zusammen mit einer den ausgelesenen Teil des Bildwiederholspeichers bezeichnenden Kennung.

Das Melde- und Eingaberechnersystem wartet eine vorgegebene Zeit auf den Empfang der Prüfredundanzen von beiden Bildschirmansteuerrechnern und führt, sobald es über beide Prüfredundanzen verfügt, einen Vergleich der Prüfredundanzen einschließlich der Kennungen durch. Weichen die Prüfredundanzen voneinander ab, oder werden innerhalb der vorgegebenen Zeit nicht beide Prüfredundanzen empfangen, so führt das Melde- und Eingaberechnersystem eine Sicherheitsreaktion durch. Dabei werden z.B. angeforderte Hilfshandlungen zurückgewiesen, bereits begonnene Freigabeprüfungen werden abgebrochen. Außerdem wird das Fehlen der Übereinstimmung angezeigt.

Um eine schnellere Prüfung der Übereinstimmung der Bildspeicherinhalte - etwa in Verbindung mit einer beabsichtigten Hilfsbedienung - zu erreichen, kann auf die Übertragung der Prüfredundanzen für einzelne vorgegebene Teile der Bildwiederholspeicher verzichtet werden. Anstelle dessen können die jeweils ermittelten Prüfredundanzen mit den Prüfredundanzen weiterer Teile der Bildwiederholspeicher exklusiv-oder-verknüpft und erst nach Auslesen der gesamten Bildwiederholspeicher, oder der für diesen Fall definierten Teile davon, die so gebildeten Gesamt-Prüfredundanzen an das Melde- und Eingaberechnersystem rückübertragen werden.

## Patentansprüche

1. Verfahren zur ständigen Prüfung einer von einer übergeordneten, signaltechnisch sicheren Datenverarbeitungsanlage in mindestens zwei voneinander unabhängigen Datenkanälen parallel erarbeiteten Bildschirmdarstellung, die in Bildwiederholspeichern mindestens zweier wechselweise auf denselben Bildschirm aufschaltbarer Bildschirmansteuerrechner in Form von Bildpunktdaten parallel abgelegt ist, mittels Vergleichs von aus Bildpunktdaten der Bildwiederholspeicher gebildeten Prüfredundanzen,
**dadurch gekennzeichnet**, daß die übergeordnete Datenverarbeitungsanlage (MEM) quasi gleichzeitig ein Prüfaufforderungstelegramm an beide Bildschirmansteuerrechner (VC1, VC2) ausgibt, daß beide Bildschirmansteuerrechner auf das Prüfaufforderungstelegramm hin in ihrem Bildwiederholspeicher (BWS1, BWS2) abgelegte Bildpunktdaten rücklesen, dabei durch zyklische Verknüpfung mit einem vorgegebenen Redundanzpolynom von an die Datenmenge angepaßter Länge deren Prüfredundanz berechnen und diese an die übergeordnete Datenverarbeitungsanlage (MEM) übertragen und daß die übergeordnete Datenverarbeitungsanlage prüft, ob die Übertragungen von beiden Bildschirmansteuerrechnern innerhalb einer vorgegebenen Zeitspanne erfolgen und die von den Bildschirmansteuerrechnern übertragenen Prüfredundanzen übereinstimmen und eine Sicherheitsreaktion auslöst, wenn dies nicht der Fall ist.

2. Verfahren nach Anspruch 1, dadurch gekennzeichnet, daß innerhalb eines Prüfaufforderungstelegramms ein vorgebener Bereich innerhalb der Bildwiederholspeicher (BWS1, BWS2) bezeichnet ist und daß die Prüfredundanz aus den in dem vorgegebenen Bereich des Bildwiederholspeichers abgelegten Bildpunktdaten berechnet wird.

3. Verfahren nach Anspruch 2, dadurch gekennzeichnet, daß dem vorgegebenen Bereich im Prüfaufforderungstelegramm eine Bereichskennung fest zugeordnet ist und daß zusammen mit jeder Prüfredundanz auch die Kennung des Bereichs übertragen wird, aus dessen Bildpunktdaten die Prüfredundanz berechnet wurde.

4. Verfahren nach Anspruch 1, dadurch gekennzeichnet, daß zur Berechnung der Prüfredundanz aus dem gesamten Dateninhalt des jeweiligen Bildwiederholspeichers (BWS1, BWS2) der Bildwiederholspeicher in einzelne Teilbereiche unterteilt wird, die Prüfredundanzen der Teilbereiche berechnet werden und aus den Prüfredundanzen der Teilbereiche eine Gesamt-Prüfredundanz gebildet wird.

5. Verfahren nach Anspruch 4, dadurch gekennzeichnet, daß zur Bildung der Gesamt-Prüfredundanz die Prüfredundanzen der Teilbereiche nacheinander einer Exklusiv-Oder-Verknüpfung unterworfen werden.

6. Verfahren nach einem der vorstehenden Ansprüche, dadurch gekennzeichnet, daß die Aufschaltung der Bildschirmansteuerrechner auf den Bildschirm mittels eines Umschalters erfolgt.

7. Verfahren nach einem der vorstehenden Ansprüche, dadurch gekennzeichnet, daß im Prüfaufforderungstelegramm eine Anweisung ausgegeben werden kann, die bewirkt, daß die Bildpunktdaten der Bildspeicher oder eines Teils der Bildspeicher als solche an die übergeordnete Datenverarbeitungsanlage übertragen und dort auf Übereinstimmung geprüft werden.

## Claims

1. Method of continuously checking a screen display created in parallel in at least two independent data channels by a higher-level fail-safe data processing system, said screen display being stored in parallel in the form of picture-element data in refresh memories of at least two video control computers connectable alternately to the same screen, by comparing redundancies formed from picture-element data of the refresh memories,
**characterized in** that the higher-level data processing system (MEM) delivers a check request message to both video control computers (VC1, VC2) quasi-simultaneously, that in response to the check request message, both video control computers retrieve picture-element data stored in their associated refresh memories (BWS1, BWS2), calculate the redundancy of said picture-element data by cyclic combination with a redundancy polynomial of a length adapted to the amount of data, and transfer said redundancy to the higher-level data processing system (MEM), and that the higher-level data processing system checks whether the transfers from both video control computers take place within a predetermined period of time and whether the redundancies transferred from the video control computers are identical, and initiates a safety reaction if that is not the case.

2. A method as claimed in claim 1, characterized in that a predetermined area of the respective refresh memory (BWS1, BWS2) is specified within a check request message, and that the redundancy is calculated from the picture-element data stored in the specified area of the refresh memory.

3. A method as claimed in claim 2, characterized in that an area label is permanently assigned to the specified area in the check request message, and that together with each redundancy, the label of the area from whose picture-element data the redundancy was calculated is transferred.

4. A method as claimed in claim 1, characterized in that, to calculate the redundancy from the entire contents of the respective refresh memory (BWS1, BWS2), the refresh memory is divided into individual areas, the redundancies of the areas are calculated, and a total redundancy is formed from the redundancies of the areas.

5. A method as claimed in claim 4, characterized in that, to form the total redundancy, the redundancies of the areas are exclusive-ORed one after the other.

6. A method as claimed in any one of the preceding claims, characterized in that the connection of the video control computers to the screen is effected by means of a double-throw switch.

7. A method as claimed in any one of the preceding claims, characterized in that within the check request message, an instruction can be output which causes the picture-element data of the refresh memories or of part of the refresh memories to be transferred as such to, and checked for agreement in, the higher-level data processing system.

## Revendications

1. Procédé pour le contrôle permanent d'un affichage sur écran qui est élaboré en parallèle, sur au moins deux canaux de données indépendants l'un de l'autre, par une installation principale de traitement des données, sûre du point de vue de la technique de signalisation et qui est mémorisé en parallèle, sous forme de données relatives aux pixels, dans les mémoires de répétition d'image d'au moins deux calculateurs d'activation d'écran qui peuvent être altenativement commutés sur le même écran, et ceci au moyen d'une comparaison des redondances de contrôle formées à partir des données, relatives aux pixels, des mémoires de répétition d'image,
procédé caractérisé par le fait que l'installation principale de traitement des données (MEM) envoie, quasi simultanément, un télégramme de demande de contrôle aux deux calculateurs d'activation d'écran (VC1, VC2)), par le fait que, à réception de ce télégramme de demande de contrôle, les deux calculateurs d'activation de l'écran procèdent à une rétrolecture des données, relatives aux pixels, mémorisées dans leur mémoire de répétition d'image (BWS1, BWS2), y calculent, par liaison logique cyclique avec un polynome de redondance prescrit, de longueur adaptée à la quantité de données, leur redondance de contrôle et la transmettent à l'installation principale de traitement des données (MEM) et par le fait que l'installation principale de traitement des données vérifie si les transmissions en provenance des deux calculateurs d'activation d'écran se font à l'intérieur d'un intervalle de temps prescrit et si les redondances de contrôle transmises par les calculateurs d'activation d'écran coincident et déclenche une réaction de sécurité si ce n'est pas le cas.

2. Procédé selon la revendication 1, caractérisé par le fait qu'à l'intérieur d'un télégramme de demande de contrôle est désignée une zone prescrite située à l'intérieur de la mémoire de répétition d'image (BWS1, BWS2) et que la rendondance de contrôle est calculée à partir des données, relatives aux pixels, mémorisées dans la zone prescrite de la mémoire de répétition d'image.

3. Procédé selon la revendication 2, caractérisé par le fait qu'à la zone prescrite dans le télégramme de demande de contrôle correspond de façon fixe une identification de zone et qu'en même temps que chaque redondance de contrôle est également transmise l'identification de la zone à partir des données, relatives aux pixels, de laquelle a été calculée la redondance de contrôle.

4. Procédé selon la revendication 1, caractérisé par le fait que pour calculer la redondance de contrôle à partir de la totalité du contenu de la mémoire de répétition d'image respective (BWS1, BWS2), on divise la mémoire de répétition d'image en différentes zones partielles, on calcule les redondances de contrôle des zones partielles et, à partir des redondances de contrôle des zones partielles, on forme une redondance de contrôle globale.

5. Procédé selon la revendication 4, caractérisé par le fait que pour former la redondance de contrôle globale on soumet successivement les redondances de contrôle des zones partielles à une opération logique OU exclusif.

6. Procédé selon l'une des revendications précédentes, caractérisé par le fait que l'intervention des calculateurs d'activation de l'écran sur l'écran se fait au moyen d'un commutateur.

7. Procédé selon l'une des revendications précédentes, caractérisé par le fait que dans le télégramme de demande de contrôle peut être émise une instruction qui fait que les données, relatives aux pixels, des mémoires d'image ou d'une partie des mémoires d'image sont transmises comme telles à l'installation principale de traitement des données et que leur coincidence y est contrôlée.
